# EUROPEAN PATENT SPECIFICATION

(11) **EP 2 109 278 B1**
(45) Date of publication and mention of the grant of the patent: **14.09.2011**
(21) Application number: 08154173.2
(22) Date of filing: 07.04.2008
(51) Int. Cl.: H04L 29/06

(54) **Method and apparatus for generating a new key**
Verfahren und Vorrichtung zum Erzeugen eines neuen Schlüssels
Procédé et appareil de génération d'une nouvelle clé

(43) Date of publication of application: 14.10.2009
(73) Proprietor: NTT DoCoMo, Inc., Tokyo (JP)
(72) Inventor: Zugenmaier, Alf, 81241 Munich (DE)
(74) Representative: Betten & Resch

(56) References cited:
- "3rd Generation Partnership Project; Technical Specification Group Services and System Aspects; Rationale and track of security decisions in Long Term Evolved (LTE) RAN / 3GPP System Architecture Evolution (SAE) (Release 8)"[Online] vol. 1.1.0, December 2007 (2007-12), pages 1-116, XP002495037 Retrieved from the Internet: URL:http://www.3gpp.org/ftp/Specs/archive/ 33%5Fseries/33.821/> [retrieved on 2008-09-09]

## Description

### FIELD OF INVENTION

The present invention relates to a method and an apparatus for generating a new key to be used in a handover, in particular a handover in a LTE mobile communications system as envisaged by the 3GPP.

### BACKGROUND OF THE INVENTION

Before starting with the description, at first some terms used in the following are explained.
3GPP Third Generation Partnership Project
ACK acknowledgment
aGW Access Gateway
ARQ automatic repeat request
AS Access Stratum
NAS Non-Access Stratum
C-RNTI cell radio network temporary identifier
E-UTRAN evolved UTRAN
EPC evolved packet core
HO hand handover
LTE long term evolution
MAC medium access control
MME mobility management entity
Node-B base station
eNB evolved Node B
QoS quality of service
RNTI radio network temporary identifier
RRC radio resource control
RRM radio resource management
S1 interface between an eNodeB and an MME/SEA gateway
SA Security Association
SAE system architecture evolution
U-Plane user plane
UE user equipment
UTRA universal terrestrial radio access
UTRAN universal terrestrial radio access network
X2 interface between two eNB

The general direction in the LTE security has been to separate the security between access stratum AS (radio resource control RRC security in Evolved Node-B eNB) and non-access stratum (NAS) signaling, as well as to terminate the user plane security above eNB. The requirement is also that the radio link and the core network must have cryptographically separate keys.

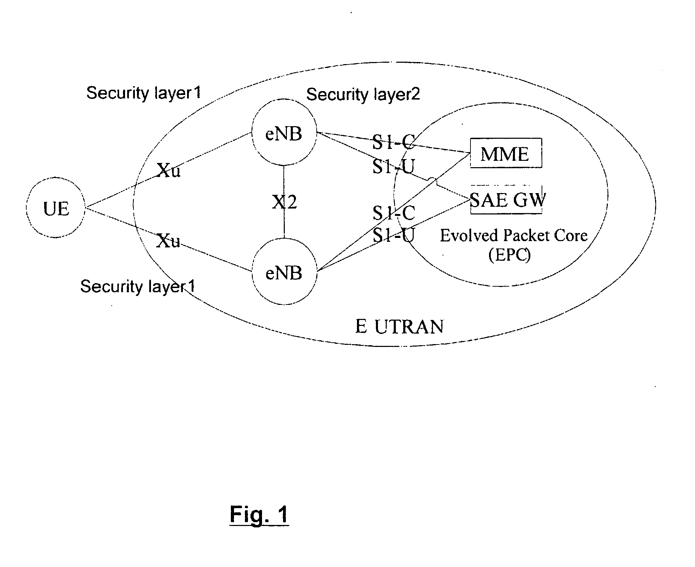

The result is that LTE system has two layers of protection instead of one layer perimeter security like in UTRAN. This is schematically illustrated in Fig. 1.

The first layer is the Evolved UTRAN (E-UTRAN) network (radio resource control RRC security and User plane UP protection) and the second layer is the Evolved Packet Core (EPC) network (NAS signaling security).

The design target has been to minimize the effects of the compromised E-UTRAN security layer (1st) to the EPC security layer (2nd). This principle improves the overall system security and allows placement of eNBs into more vulnerable locations without high risks for the operators. It also makes the overall system security evaluation and analysis easier in case of multiple access technologies connected to the EPC. However, care should be taken when designing the interface between these two security layers, namely the S1-C and S1-U interfaces.

A problematic aspect in such a scenario from a security point of view is the handover (HO) of a user equipment (UE) from one eNB to another.

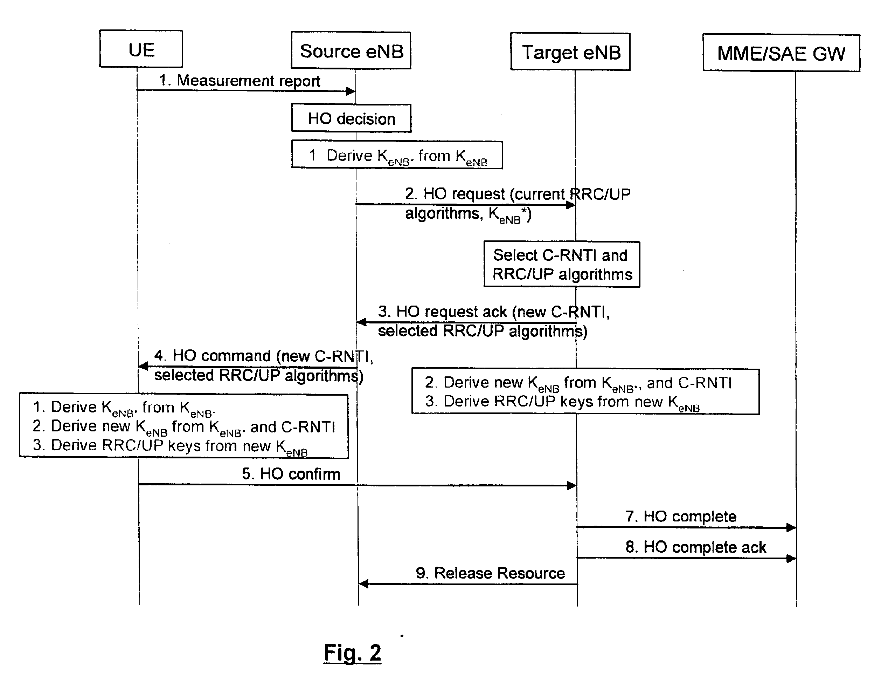

The handover according to the prior art as described for example in 3GPP TR 33.821 v1.0.0 will now be explained in connection with Fig. 2. It shows a signal flow for a user equipment (UE) such as a mobile phone from one eNB to another.

The protection of the communication between the eNB and the UE is achieved by the key K_eNB, and for forward security a new K_eNB has to be derived. For that purpose at first there is derived K_eNB* (which may be regarded as a "temporary key" or "intermediate key") by the source eNB after a decision to perform a handover was made. Together with the current RRC/UP algorithms in use it is forwarded to the target eNB.

The target eNB then selects the RRC/UP algorithms to be used and a C-RNTI (cell radio network temporary identifier) which identifies the UE in the new cell and returns them to the source eNB from where they are forwarded to the UE.

The UE then derives K_eNB* from K_eNB, and based thereupon (and possibly also based on C-RNTI) it derives new K_eNB to be used in communication with the target eNB. It further derives the RRC/UP keys from the new K_eNB.

Similarly the target eNB also derives the new K_eNB based on K_eNB* (and possibly also based on C-RNTI) in the same manner as the UE and derives the RRC/UP keys based on the new K_eNB.

The UE then sends a confirmation message to the target eNB which then informs the MME/SAE GW about the completion of the handover (HO) and then sends a message to the source eNB to release the resource. In document 3GPP TR 33.821 v1.0.0 individual steps are described as follows:
1. UE measurement report
2. Source eNB calculates a one way hash over the current K_{eNB} to get K_{ENB*} and transfers it to the target eNB in the handover request message including current RRC/UP algorithms
3. Target eNB sends handover response message to the source eNB, which includes the new C-RNTI, selected RRC/UP algorithms, and some other parameters (which are e.g. described in 3GPP TR 25.813, section 9.1.5). Target eNB derives a new K_{eNB} from C-RNTI and K_{eNB*} by K_{eNB}_new = KDF(K_{eNB*} ∥ C-RNTI) and further derives K_{RRCenc}, K_{RRCint}, K_{UPenc} from the K_{eNB_}new.
4. Source eNB sends integrity protected and ciphered handover command message to the UE including C-RNTI and selected RRC/UP algorithms. In case the algorithms do not change they can be omitted.
5. UE derives the K_{eNB*}, new K_{eNB}, K_{RRCenc}, K_{RRCint}, and K_{UPenc} and sends handover confirm message to the target eNB integrity protected and ciphered with the new RRC keys.

For further details reference is made to 3GPP TR 33.821 v1.0.0.

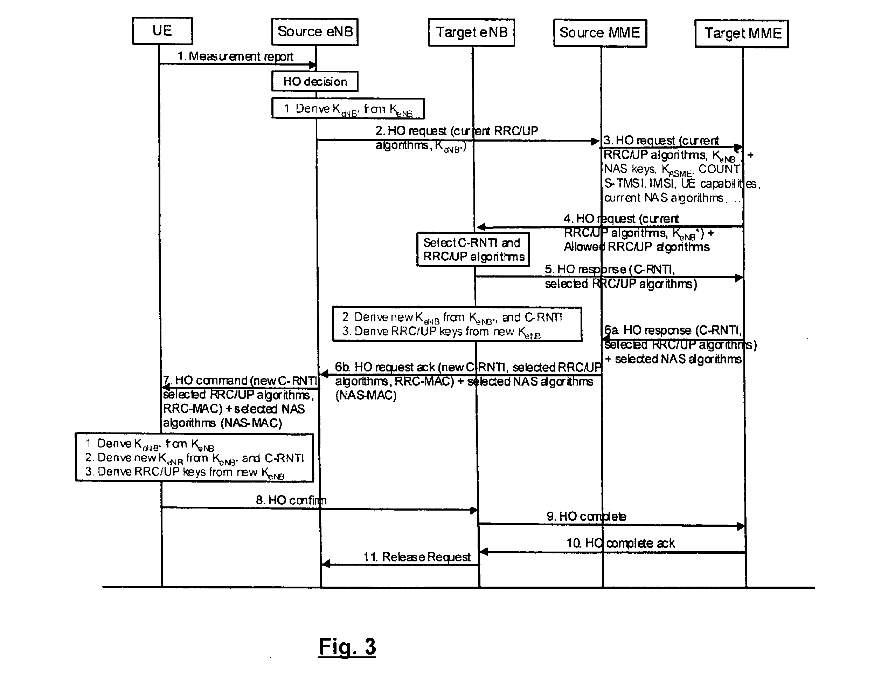

In the prior art example shown in Fig. 2 only one mobility management entity (MME) is involved, it is an Intra-MME handover. However, in 3GPP TR 33.821 v1.0.0 also an Inter-MME handover is envisaged which is illustrated in Fig. 3.

On inter-MME handover as on intra-MME handover, the fresh K_{eNB}* is transferred to the target eNB. A new K_{eNB} is derived from the K_{eNB*} and C-RNTI, and K_{RRCenc}, K_{RRCint}, K_{UPenc} are refreshed with the help of this new K_{eNB}. The proposed procedure is shown in Fig. 3.

The individual steps are described in 3GPP TR 33.821 v1.0.0 as follows.
1. UE measurement report
2. Source eNB calculates a one way hash over the current K_{eNB} to get K_{eNB*} and transfers it to the source MME in the handover request message
3. Source MME transfers the K_{eNB*} and other related MME security context information, like NAS keys, COUNT values for NAS protection, S-TMSI, IMSI, and K_{ASME} to the target MME in the handover request message.
4. Target MME includes the K_{eNB*}in the handover request sent to target eNB with allowed RRC/UP algorithms.
5. Target eNB selects the same RRC/UP algorithms if possible. Target eNB sends handover response message to the target MME, which includes the new C-RNTI, selected RRC/UP algorithms, and some other parameters (which are e.g. described in 3GPP TR 25.813, section 9.1.5). Target eNB derives a new K_{eNB} from C-RNTI and K_{eNB*} by K_{eNB_}new = KDF(K_{eNB*} ∥ C-RNTI) and further derives K_{RRCenc}, K_{RRCint}, K_{UPenc} from the Ke_{NB_}new.
6. Target MME forwards the handover response with selected MME algorithms to source MME which sends it to source eNB including NAS-MAC.
7. Source eNB sends the handover command message to the UE including NAS level message with the selected NAS algorithms and NAS-MAC. This AS level message is protected with the old RRC integrity and ciphering keys shared with the source eNB. The message also includes target eNB algorithms (for RRC and UP) if different than the source eNB algorithms.
8. UE derives the Ke_{NB*}, new K_{eNB}, K_{RRCenc}, K_{RRCint}, and K_{UPenc} and sends handover confirm message to the target eNB integrity protected and ciphered with the new RRC keys.

Here the KDF is a key derivation function, and K_{RRCenc}, K_{RRCint}, and K_{Upenc} are keys which protect the communication between UE and eNB and which are derived from K_{eNB_}new.

For further details reference is made to 3GPP TR 33.821 v1.0.0.

One of the problems in such a scenario is to secure K_eNB derivation for handovers. A possible attacker model may look as follows:
1. The attackers goal is to listen in on UP and RRC traffic.
2. The attacker is able to compromise one eNodeB.
3. The attacker is able to eavesdrop on most radio traffic in the surrounding cells, i.e. the attacker has installed radio receivers in many of the cells surrounding the compromised eNodeB, or the attacker is following a targeted UE with a radio receiver.
4. The attacker is not able to break cryptography, i.e. decrypt ciphertext without knowledge of the key, except by brute force attack. Of course, the attacker can decrypt ciphertext if he obtains the appropriate key (whether legitimately or illegitimately, e.g. by stealing it somewhere or breaking into a network element such as eNB).
5. The attacker is not active, i.e. the attacker doesn't prevent handovers, or force handovers to other compromised eNodeBs.

As an attack on K_eNB derivation may compromise an eNB, all keys in the eNB must be considered compromised. If the forward security relies on the keys of a compromised eNB, the handover cannot made in a secure manner.

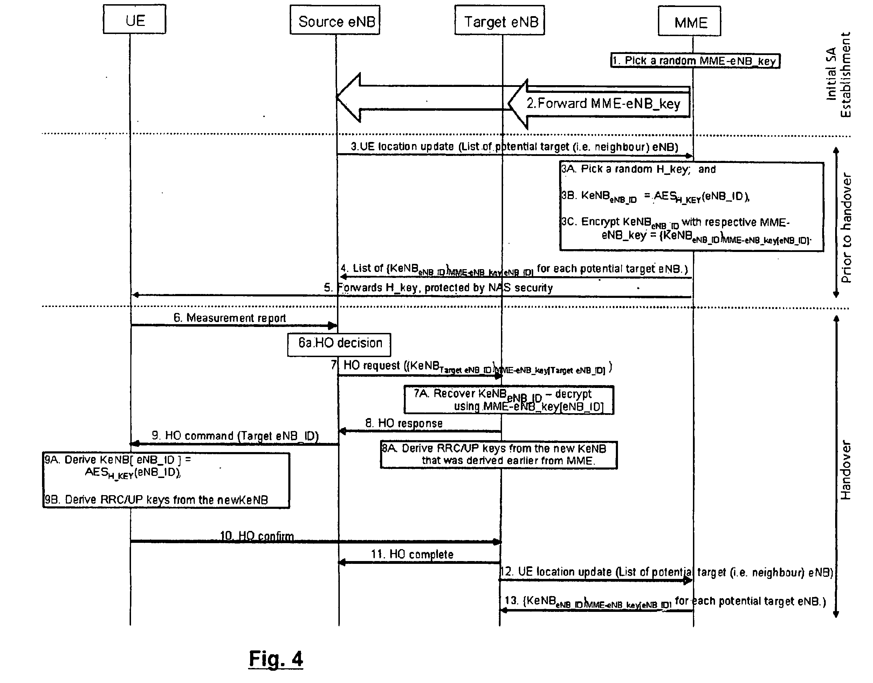

Some solutions to this problem have been proposed, e.g. in 3GPP TSG SA WG3 Security — SA3#50 S3-080216 SanYa, China, 25 - 29 Feb 2008, Alcatel Lucent. In this document three alternative solutions are proposed, the signal flow proposed for the first alternative is schematically shown in Fig. 4. It involves the MME in generation of the new key for the handover, as can be seen from Fig. 4. For details reference is made to the mentioned document.

What can be seen from Fig. 4, however, is that the proposed solution requires additional signalling, in particular an additional signalling message from the MME to the UE (message no. 5 in Fig. 4).

It is therefore desirable to provide a solution for forward secrecy in key generation for a handover in LTE which avoids the mentioned disadvantages.

### SUMMARY OF THE INVENTION

The present invention is defined in the independent claims. The dependent claims define embodiments of the invention.

According to one embodiment there is provided a method for generating a new key (K_eNB) which is used to protect the communication between a mobile terminal (UE) and a target base station when said user equipment performs a handover from a source base station to said target base station, said method comprising:
generating by said source base station a first temporary key (K_eNB*) based on the key (K_eNB) which is used to protect the communication between said mobile terminal (UE) and said source base station;
forwarding said first temporary key (K_eNB*) to a key generation unit for generating a second temporary key (K_ENB*+) based on said first temporary key (K_eNB*) and further based on a shared secret which said key generation unit and said mobile terminal share together;
forwarding said second temporary key (K_ENB*+) to said target base station and generating said new key (K_eNB) based on said second temporary key (K_ENB*+);
generating by said mobile terminal said first temporary key (K_eNB*) based on the key used between said mobile terminal and said source base station and generating said second temporary key (K_ENB*+) based on said first temporary key and further based on a shared secret which said key generation unit and said mobile terminal share together;
generating by said mobile terminal said new key (K_eNB) based on said second temporary key (K_ENB*+).

The generation of the second temporary key on the basis of said shared secret involves a further security association into the key generation procedure, the further security association improving the security in case of the source base station or its key K_eNB having been compromised.

According to one embodiment the method further comprises:
forwarding from said to said key generating unit to said mobile terminal information about whether the generation of said new key (K_eNB) should be based on said shared secret, and
if said information indicates that the generation of said new key (K_eNB) should be based on said shared secret, generating said second temporary key (K_ENB*+) based on said first temporary key and then said new key (K_eNB) based on said second temporary key (K_ENB*+) by said mobile terminal, and
if said information indicates that the generation of said new key (K_eNB) should not be based on said shared secret, generating by said mobile terminal said first temporary key (K_eNB*) and then said new key (K_eNB) based on said first temporary key (K_eNB*).

In this manner backward compatibility can be achieved. If there is no information indicating the use of the further shared secret, the key generation may be performed as in the legacy system without the second temporary key.

According to one embodiment information as to whether the generation of said new key (K_eNB) should be based on said shared secret is forwarded in a piggyback manner together with other information transmitted during said handover from said key generating unit to said mobile terminal.

In this way the mechanism can be implemented into existing systems without introducing additional signaling messages.

According to one embodiment information as to whether the generation of said new key (K_eNB) should be based on said shared secret is forwarded in a piggyback manner together with other information transmitted during said handover from said key generating unit to said mobile terminal, said other information being the radio network temporary identifier.

The use of the radio network temporary identifier to piggyback the information makes elegantly use of the messages available during a LTE handover for carrying this information.

According to one embodiment said radio network temporary identifier or the selected algorithm information element is generated in a way which leaves at least one or more bits for piggybacking information as to whether the generation of said new key (K_eNB) should be based on said shared secret.

This provides the space for transmitting the information as to whether the generation of said new key (K_eNB) should be based on said shared secret in a piggyback manner.

According to one embodiment said source and target base stations are evolved node-Bs in an LTE system; and/or
said key generating unit is a mobility management entity and/or a SAE gateway; and/or
said shared secret is one or more of the following keys: K_NASenc, K_NASint or K_ASME of an LTE system or a derived key which has been derived based on one or more of them.

In this manner the mechanism can be implemented into a handover of an LTE system.

According to one embodiment there is provided an apparatus for generating a new key (K_eNB) which is used to protect the communication between a mobile terminal (UE) and a target base station when said mobile terminal performs a handover from a source base station to said target base station, said apparatus comprising:
a module for generating by said source base station a first temporary key (K_eNB*) based on the key (K_eNB) which is used to protect the communication between said mobile terminal (UE) and said source base station;
a module for forwarding said first temporary key (K_eNB*) to a key generation unit for generating a second temporary key (K_ENB*+) based on said first temporary key (K_eNB*) and further based on a shared secret which said key generation unit and said mobile terminal share together;
a module for forwarding said second temporary key (K_ENB*+) to said target base station and generating said new key (K_eNB) based on said second temporary key (K_ENB*+);
a module for generating by said mobile terminal said first temporary key (K_eNB*) based on the key used between said mobile terminal and said source base station and generating said second temporary key (K_ENB*+) based on said first temporary key;
a module for generating by said mobile terminal said new key (K_eNB) based on said second temporary key (K_ENB*+).

In this manner there may be implemented an apparatus which carries out a method according to an embodiment of the invention.

According to one embodiment the apparatus further comprises:
a module for carrying out a method according to one of the embodiments of the invention.

According to one embodiment there is provided an apparatus for generating a new key (K_eNB) which is used to protect the communication between a mobile terminal (UE) and a target base station when said mobile terminal performs a handover from a source base station to said target base station, said apparatus comprising:
a key generation unit for generating a second temporary key (K_ENB*+) based on a first temporary key (K_eNB*) and further based on a shared secret which said key generation unit and said mobile terminal share together, wherein
there has been generated by said source base station a first temporary key (K_eNB*) based on the key (K_eNB) which is used to protect the communication between said mobile terminal (UE) and said source base station, said first temporary key having been forwarded to said key generation unit; and
a module for forwarding said second temporary key (K_ENB*+) to said target base station so that it may generate said new key (K_eNB) based on said second temporary key (K_ENB*+).

In this manner an apparatus which acts as a key generation unit according to an embodiment of the invention may be implemented.

According to one embodiment there is provided an apparatus for generating a new key (K_eNB) which is used to protect the communication between a mobile terminal (UE) and a target base station when said mobile terminal performs a handover from a source base station to said target base station, said apparatus being said target base station, and said apparatus comprising:
a module for generating said new key (K_eNB) based on a second temporary key (K_ENB*+) which has been generated by an apparatus according to claim 9.

In this manner an apparatus which acts as a target base station according to an embodiment of the invention may be implemented.

According to one embodiment there is provided an apparatus, said apparatus being a mobile terminal for generating a new key (K_eNB) which is used to protect the communication between a mobile terminal (UE) and a target base station when said mobile terminal performs a handover from a source base station to said target base station, said apparatus comprising
a module for generating by said mobile terminal a first temporary key (K_eNB*) based on the key used between said mobile terminal and said source base station;
a module for generating a second temporary key (K_ENB*+) based on said first temporary key and further based on a shared secret which said key generation unit and said mobile terminal share together;
a module for generating by said mobile terminal said new key (K_eNB) based on said second temporary key (K_ENB*+).

In this manner an apparatus which acts as a mobile terminal according to en embodiment of the invention may be implemented.

According to one embodiment the apparatus further comprises:
one or more modules to perform a method according to one of the embodiments of the invention.

According to one embodiment said new key (K_eNB) is generated based on a shared secret which said key generation unit and said mobile terminal share together if said source base station is considered to be insecure.

In this manner an LTE system may be adapted to the fact that some eNBs may be regarded as insecure.

According to one embodiment there is provided computer program comprising computer program code which when being executed on a computer enables said computer to perform a method according to one of the embodiments of the invention.

### DESCRIPTION OF THE DRAWINGS

Fig. 1 schematically illustrates an LTE environment where embodiments of the invention may be employed.
Fig. 2 schematically illustrates the signal flow of a handover according to the prior art.
Fig. 3 schematically illustrates the signal flow of a further handover according to the prior art.
Fig. 4 schematically illustrates the signal flow of a further handover according to the prior art.
Fig. 5 schematically illustrates the signal flow of a handover according to an embodiment of the invention.

### DETAILED DESCRIPTION

According to embodiments of the invention there is provided a solution for providing forward security which relies on security associations with another element, such as the MME. This will be explained now in the following in somewhat more detail.

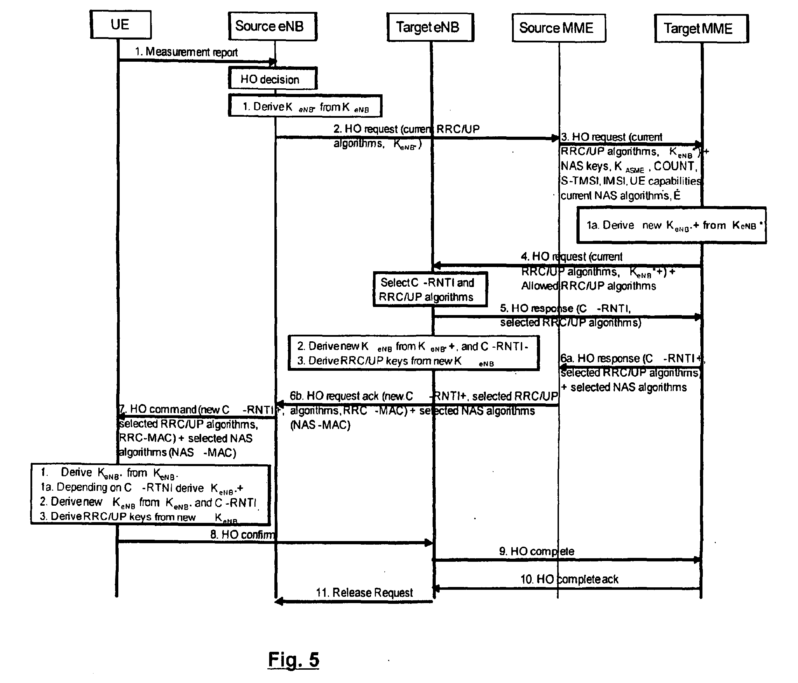

Fig. 5 shows the signal flow of a handover according to one embodiment of the invention.

This embodiment is based on the handover mechanism as described in connection with Fig. 3 and as disclosed in 3GPP TR 33.821 v1.0.0, however, with some modifications. The explanation in the following will focus on the differences with the prior art mechanism of Fig. 3.

After the KeNB* has been received by the target MME, the Target MME derives K_eNB*+ from KeNB* based on a secret which the target MME shares with the UE. Examples of such secrets are for example the following keys: K_NASenc, K_NASint or K_ASME, e.g. with a key derivation function keyed with K_NASenc, K_NASint or K_ASME or a key derived based on one or more of them.

K_{ASME} is e.g. a key derived by UE and in the Home Subscriber Server HSS from during a setup procedure, e.g. by running a Authentication and Key Agreement AKA protocol.

It is the key of an Access Security Management Entity (ASME), the role of which in LTE systems may be taken by the MME, and it may be used for deriving further keys such as K_NASenc, or K_NASint. K_{NASint} is a key derived by UE and MME from K_{ASME} . It may only be used for the protection of NAS traffic with a particular integrity algorithm. K_{NASenc} is a key derived by UE and MME from K_{ASME}. It may only be used for the protection of NAS traffic with a particular encryption algorithm.

In any case, K_NASenc, K_NASint or K_ASME are examples of shared secrets which are shred between UE and MME. In operation 1a) shown in Fig. 5 one (or more) of them is used to derive a further temporary or intermediate key, K_eNB*+. This may be done by any suitable key generation function.

Message 4 from the target MME to the target eNB now includes this new temporary or intermediate key K_eNB*+.

The Target eNB doesn't know the difference between K_eNB* and K_eNB*+, it cannot distinguish between both of them, so it proceeds to derive K_eNB as if nothing has changed compared to the prior art mechanism.

It should be noted here that according to one embodiment the derivation of C-RNTI performed by the target eNB in response to the message 4 (handover request) should leave space for piggybacking information. Therefore, the C-RNTI may have some empty space (e.g. just one bit) which may be used to piggyback additional information. The R-CNTI without this additional information may be referred to as R-CNTI-, while the C-RNTI carrying this additional information may be referred to as C-RNTI+.

As illustrated in Fig. 5, message 6a then uses C-RNTI+ to piggyback information about the changed K_eNB derivation from the target MME to the source MME. Message 6b then just forwards C-RNTI+ from the source MME to the source eNB, and then Message 7 forwards C-RNTI+ from the source eNB to the US.

The UE now has to derive the new K_eNB. For that purpose at first it checks based on the piggybacked information contained in the C_RNTI+ whether the new K_eNB should be derived merely on the K_eNB* (as in the prior art), or whether the shared secret which is shared between the MME and the UE should play a role in the key derivation. In the latter case, the UE will now at first calculate the further temporary or intermediate key K_eNB*+ from temporary or intermediate key K_eNB*, and then it will derive the new K_eNB based on the K_ENB*+.

In this manner a further security association (SA) with a MME is involved in the key generation of the new K_eNB, and this improves the forward security of the key refresh in case of a handover from one eNB to another.

The fact that the mentioned shared secret which is shared between the UE and the MME should be used in the derivation of the new K_eNB may be agreed in advance, it may be a property of the system as a whole or of the setup. However, if downward compatibility should be achieved, it is preferable that the UE is able to either derive the new key K_eNB based on the shared secret or alternatively just based on K_eNB* as in the prior art. For that purpose the piggybacked information, according to one embodiment carried in the C-RNTI, avoids an additional signaling between the MME and the UE.

There are several changes or modifications which can be imagined to the embodiments described so far. For example, in the embodiment described in connection with Fig. 5, the handover is an Inter-MME handover which involves a change from a source MME to a target MME. However, this needs not necessarily to take place, the MME may also be the same before and after the handover. It will be readily understood by the skilled person that in such a case the source MME and the target MME are not different but there is just one MME which is then responsible for the generation of the K_ENB*+. Furthermore, message 3 from the source MME to the target MME in this case actually is not necessary because there is only one MME which then is also the origin of messages 4 and 9 and the recipient of messages 5 and 10 in Fig. 5. Moreover, message 6a in this case becomes obsolete.

According to a further embodiment there may be provided a separate entity (separate form the MME) for deriving the key K_ENB*+. This entity may be regarded as a "module for generating a temporary key K_ENB*+", and according to one embodiment it may be located in the security layer 1(S1), so that the handover may then not need to access security layer 2 (S2), similar to the prior art handover mechanism shown in Fig. 2. The target eNB may for example request through the X2 interface from the separate temporary key generation entity or module the generation of key K_ENB*+. Nevertheless the handover mechanism makes use of a further security association involving the security layer 2, by making use of the shared secret between UE and MME for generating the new key K_eNB.

According to a further embodiment, however, the separate entity for generating the further temporary key K_ENB*+ may be located in security layer 2.

According to one embodiment the handover mechanism as described before is required to be executed for those locations which are considered to be insecure. E.g. the system may be configured such that all handovers from insecure locations (insecure eNBs) require handovers according to one of the embodiments described before. The definition of an insecure X2 interface location (an insecure eNB) may be operator deployment specific.

It will be understood by the skilled person that the embodiments described hereinbefore may be implemented by hardware, by software, or by a combination of software and hardware. The modules and functions described in connection with embodiments of the invention may be as a whole or in part implemented by microprocessors or computers which are suitably programmed such as to act in accordance with the methods explained in connection with embodiments of the invention. An apparatus implementing an embodiment of the invention may e.g. comprise a node or element in a network which is suitably programmed such that it is able to carry out a handover as described in the embodiments of the invention.

User equipments (UE) in accordance with embodiments of the invention may be any kind of mobile terminals, PDAs, mobile phones, smartphones, or the like.

According to an embodiment of the invention there is provided a computer program, either stored in a data carrier or in some other way embodied by some physical means such as a recording medium or a transmission link which when being executed on a computer enables the computer to operate in accordance with the embodiments of the invention described hereinbefore.

Embodiments of the invention may be implemented e.g. by nodes in a network or any entities in a network which are programmed to operate in accordance with the handover mechanisms as described before.

## Claims

1. A method for generating a new key (K_eNB) which is used to protect the communication between a mobile terminal (UE) and a target base station when said user equipment performs a handover from a source base station to said target base station, said method comprising:
generating by said source base station a first temporary key (K_eNB*) based on the key (K_eNB) which is used to protect the communication between said mobile terminal (UE) and said source base station; said methood being
**characterized by**:
forwarding said first temporary key (K_eNB*) to a key generation unit for generating a second temporary key (K_ENB*+) based on said first temporary key (K_eNB*) and further based on a shared secret which said key generation unit and said mobile terminal share together;
forwarding said second temporary key (K_ENB*+) to said target base station and generating said new key (K_eNB) based on said second temporary key (K_ENB*+);
generating by said mobile terminal said first temporary key (K_eNB*) based on the key used between said mobile terminal and said source base station and generating said second temporary key (K_ENB*+) based on said first temporary key and further based on a shared secret which said key generation unit and said mobile terminal share together;
generating by said mobile terminal said new key (K_eNB) based on said second temporary key (K_ENB*+).

2. The method of claim 1, further comprising:
forwarding from said key generating unit to said mobile terminal information about whether the generation of said new key (K_eNB) should be based on said shared secret, and
if said information indicates that the generation of said new key (K_eNB) should be based on said shared secret, generating said second temporary key (K_ENB*+) based on said first temporary key and then said new key (K_eNB) based on said second temporary key (K_EMB*+) by said mobile terminal, and
if said information indicates that the generation of said new key (K_eNB) should not be based on said shared secret, generating by said mobile terminal said first temporary key (K_eNB*) and then said new key (K_eNB) based on said first temporary key (K_eNB*).

3. The method of claim 1 or 2, wherein
information as to whether the generation of said new key (K_eNB) should be based on said shared secret is forwarded in a piggyback manner together with other information transmitted during said handover from said key generating unit to said mobile terminal.

4. The method of claim 3, wherein
information as to whether the generation of said new key (K_eNB) should be based on said shared secret is forwarded in a piggyback manner together with other information transmitted during said handover from said key generating unit to said mobile terminal, said other information being the radio network temporary identifier or the selected algorithm information element.

5. The method of one of claims 1 to 5, wherein
said radio network temporary identifier or the selected algorithm information element is generated in a way which leaves at least one or more bits for piggybacking information as to whether the generation of said new key (K_eNB) should be based on said shared secret.

6. The method of one of claims 1 to 5, wherein
said source and target base stations are evolved node-Bs in an LTE system; and/or
said key generating unit is a mobility management entity and/or a SAE gateway; and/or
said shared secret is one or more of the following keys: K_NASenc, K_NASint or K_ASME of an LTE system or a key which is derived based on one or more of them.

7. system for generating a new key (K_eNB) which is used to protect the communication between a mobile terminal (UE) and a target base station when said mobile terminal performs a handover from a source base station to said target base station, said system comprising:
a module for generating by said source base station a first temporary key (K_eNB*) based on the key (K__eNB) which is used to protect the communication between said mobile terminal (UE) and said source base station;
**characterized by**:
a module for forwarding said first temporary key (K_eNB*) to a key generation unit for generating a second temporary key (K_ENB*+) based on said first temporary key (K_eNB*) and further based on a shared secret which said key generation unit and said mobile terminal share together;
a module for forwarding said second temporary key (K_ENB*+) to said target base station and generating said new key (K_eNB) based on said second temporary key (K_ENB*+);
a module for generating by said mobile terminal said first temporary key (K_eNB*) based on the key used between said mobile terminal and said source base station and generating said second temporary key (K_ENB*+) based on said first temporary key and further based on a shared secret which said key generation unit and said mobile terminal share together;
a module for generating by said mobile terminal said new key (K_eNB) based on said second temporary key (K_ENB*+).

8. A system according to claim 7, further comprising:
a module for carrying out a method according to one of claims 1 to 6.

9. An apparatus for generating a new key (K_eNB) which is used to protect the communication between a mobile terminal (UE) and a target base station when said mobile terminal performs a handover from a source base station to said target base station, said apparatus being **characterized by** comprising:
a key generation unit for generating a second temporary key (K_ENB*+) based on a first temporary key (K_eNB*) and further based on a shared secret which said key generation unit and said mobile terminal share together, wherein
there has been generated by said source base station a first temporary key (K_eNB*) based on the key (K_eNB) which is used to protect the communication between said mobile terminal (UE) and said source base station, said first temporary key having been forwarded to said key generation unit; and
a module for forwarding said second temporary key (K_ENB*+) to said target base station so that it may generate said new key (K_eNB) based on said second temporary key (K_ENS*+).

10. The apparatus of claim 9, wherein
said radio network temporary identifier or the selected algorithm information element is generated in a way which leaves at least one or more bits for piggybacking information as to whether the generation of said new key (K_eNB) should be based on said shared secret.

11. An apparatus, said apparatus being a mobile terminal for generating a new key (K_eNB) which is used to protect the communication between a mobile terminal (UE) and a target base station when said mobile terminal performs a handover from a source base station to said target base station, said apparatus comprising
a module for generating by said mobile terminal a first temporary key (K_eNB*) based on the key used between said mobile terminal and said source base station; **characterized by**:
a module for generating a second temporary key (K_ENB*+) based on said first temporary key and further based on a shared secret which said key generation unit and said mobile terminal share together;
a module for generating by said mobile terminal said new key (K-eNB) based on said second temporary key (K_ENB*+).

12. The apparatus of one of claims 9 to 11, wherein said new key (K_eNB) is generated based on a shared secret which said key generation unit and said mobile terminal share together if said source base station is considered to be insecure.

13. A computer program comprising computer program code which when being executed on a computer enables said computer to
act as an apparatus according to one of claims 9 to 12,

## Patentansprüche

1. Ein Verfahren zum Erzeugen eines neuen Schlüssels (K_eNB), der verwendet wird, um die Kommunikation zwischen einem mobilen Terminal (UE) und einer Ziel-Basis-Station zu schützen, wenn das Benutzerequipment einen Handover von einer Ursprungsbasisstation zu der Ziel-Basisstation durchführt, wobei das Verfahren aufweist:
Erzeugen eines ersten temporären Schlüssels (K_eNB*) durch die Ursprungsbasisstation basierend auf dem Schlüssel (K_eNB), der verwendet wird, um die Kommunikation zwischen dem mobilen Terminal (UE) und der Ursprungsbasisstation zu schützen, wobei das Verfahren **gekennzeichnet ist durch**:
Weiterleiten des ersten temporären Schlüssels (K_eNB*) an eine Schlüsselerzeugungseinheit zum Erzeugen eines zweiten temporären Schlüssels (K_ENB*+) basierend auf dem ersten temporären Schlüssel (K_eNB*) und
ferner basierend auf einem geteilten Geheimnis, das die Schlüsselerzeugungseinheit und das mobile Terminal miteinander teilen;
Weiterleiten des zweiten temporären Schlüssels (K_ENB*+) an die Ziel-Basisstation und Erzeugen des neuen Schlüssels (K_eNB) basierend auf dem zweiten temporären Schlüssel (K_ENB*+);
Erzeugen des ersten temporären Schlüssels (K_eNB*) **durch** das mobile Terminal basierend auf dem Schlüssel, der verwendet wird zwischen dem mobilen Terminal und der Ursprungsbasisstation und Erzeugen des zweiten temporären Schlüssels (K_ENB*+) basierend auf dem ersten temporären Schlüssel und ferner basierend auf einem geteilten Geheimnis, das Schlüsselerzeugungseinheit und das mobile Terminal miteinander teilen;
Erzeugen des neuen Schlüssels (K_eNB) **durch** das mobile Terminal basierend auf dem zweiten temporären Schlüssel (K_ENB*+).

2. Das Verfahren nach Anspruch 1, ferner aufweisend:
Weiterleiten von Informationen darüber, ob die Erzeugung des neuen Schlüssels (K_eNB) auf dem geteilten Geheimnis basieren soll, von der Schlüsselerzeugungseinheit an das mobile Terminal und
falls die Information angibt, dass die Erzeugung des neuen Schlüssels (K_eNB) auf dem geteilten Geheimnis basieren soll, Erzeugen eines zweiten temporären Schlüssels (K_ENB*+) basierend auf dem ersten temporären Schlüssel und dann des neues Schlüssels (K_eNB) basierend auf dem zweiten temporären Schlüssel (K_ENB*+) durch das mobile Terminal, und
falls die Information angibt, dass die Erzeugung des neuen Schlüssels (K_eNB) nicht auf dem geteilten Geheimnis basieren soll, Erzeugen des ersten temporären Schlüssels (K_eNB*) durch das mobile Terminal um dann des neuen Schlüssels (K_eNB) basierend auf dem ersten temporären Schlüssel (K_eNB*).

3. Das Verfahren nach Anspruch 1 oder 2, wobei Information darüber, ob die Erzeugung des neuen Schlüssels (K_eNB) auf dem geteilten Geheimnis basieren soll in Huckepackmanier zusammen mit anderen Informationen während des Handovers von der Schlüsselerzeugungseinheit an das mobile Terminal übertragen werden.

4. Das Verfahren nach Anspruch 3, wobei Information darüber, ob die Erzeugung des neuen Schlüssels (K_eNB) auf dem geteilten Geheimnis basieren soll in Huckepackmanier zusammen mit anderen Informationen während des Handovers von der Schlüsselerzeugungseinheit an das mobile Terminal übertragen werden, wobei die anderen Informationen der temporäre Radionetzwerk-Identifizierer oder das ausgewählte Algorithmus-Informationselement sind.

5. Das Verfahren nach einem der Ansprüche 1 bis 5, wobei der temporäre Radionetzwerk-Identifizierer oder das ausgewählte Algorithmus-Informationselement auf eine Weise erzeugt werden, die zumindest ein oder mehrere Bits freilässt, um Informationen darüber, ob die Erzeugung des neuen Schlüssels (K_eNB) auf dem geteilten Geheimnis basieren soll, Huckepack zu nehmen.

6. Das Verfahren nach einem der Ansprüche 1 bis 5, wobei die Ursprungs- und die Zielbasisstationen entwickelte Evolved-Node-Bs in einem LTE-system sind; und/oder
die Schlüsselerzeugungseinheit eine Mobility Management Entity und/oder ein SAE-Gateway sind; und/oder
das geteilte Geheimnis ein oder mehrere der folgenden Schlüssel ist:
K_NASenc, K_NASint oder K_ASME eines LTE-systems oder ein Schlüssel, der aus einem oder mehreren von ihnen abgeleitet ist.

7. System zum Erzeugen eines neuen Schlüssels (K_eNB), der verwendet wird, um die Kommunikation zwischen einem mobilen Terminal (UE) und einer Ziel-Basisstation zu schützen, wenn das mobile Terminal einen Handover von einer Ursprungsbasisstation zu der Zielbasisstation durchführt, wobei das System aufweist:
ein Modul zum Erzeugen eines ersten temporären Schlüssels (K_eNB*) durch die Ursprungsbasisstation basierend auf dem Schlüssel (K_eNB), der verwendet wird, um die Kommunikation zwischen dem mobilen Terminal (UE) und der Ursprungsbasisstation zu schützen, **gekennzeichnet durch**:
ein Modul zum Weiterleiten des ersten temporären Schlüssels (K_eNB*) zu einer Schlüsselerzeugungseinheit zum Erzeugen eines zweiten temporären Schlüssels (K_ENB*+) basierend auf dem ersten temporären Schlüssel (K_eNB*) und ferner basierend auf dem geteilten Geheimnis, das die Schlüsselerzeugungseinheit und das mobile Terminal miteinander teilen;
ein Modul zum Weiterleiten des zweiten temporären Schlüssels (K_ENB*+) an die Ziel-Basisstation und zum Erzeugen des neuen Schlüssels (K_eNB) basierend auf dem zweiten temporären Schlüssel (K_ENB*+);
ein Modul zum Erzeugen des ersten temporären Schlüssels (K_eNB*) **durch** das mobile Terminal basierend auf dem Schlüssel, der verwendet wird zwischen dem mobilen Terminal und der Ursprungsbasisstation und Erzeugen des zweiten temporären Schlüssels (K_ENB*+) basierend auf dem ersten temporären Schlüssel und ferner basierend auf einem geteilten Geheimnis, das die Schlüsselerzeugungseinheit und das mobile Terminal miteinander teilen;
ein Modul zum Erzeugen des neuen Schlüssels (K_eNB) **durch** das mobile Terminal basierend auf dem zweiten temporären Schlüssel (K_ENB*+).

8. System nach Anspruch 7, ferner aufweisend:
Ein Modul zum Ausführen eines Verfahrens gemäß einem der Ansprüche 1 bis 6.

9. Eine Vorrichtung zum Erzeugen eines neuen Schlüssels (K_eNB), der verwendet wird, um die Kommunikation zwischen einem mobilen Terminal (UE) und einer Ziel-Basisstation zu schützen, wenn das mobile Terminal ein Handover von einer Ursprungsbasisstation zu der Ziel-Basisstation durchführt, wobei die Vorrichtung **gekennzeichnet ist, dadurch** dass sie aufweist:
eine Schlüsselerzeugungseinheit zum Erzeugen eines zweiten temporären Schlüssels (K_ENB*+) basierend auf dem ersten temporären Schlüssel (K_eNB*) und ferner basierend auf einem geteilten Geheimnis, das die Schlüsselerzeugungseinheit und das mobile Terminal miteinander teilen, wobei
**durch** die Ursprungsbasisstation ein erster temporärer Schlüssel (K_eNB*) erzeugt wurde, basierend auf dem Schlüssel (K_eNB), der verwendet wird,
um die Kommunikation zwischen dem mobilen Terminal (UE) und der Ursprungsbasisstation zu schützen, wobei der erste temporäre Schlüssel an die Schlüsselerzeugungseinheit weitergeleitet wurde; und
ein Modul zum Weiterleiten des zweiten temporären Schlüssels (K_ENB*+) an die Ziel-Basisstation, so dass sie einen neuen Schlüssel (K_eNB) basierend auf dem zweiten temporären Schlüssel (K_ENB*+) erzeugen kann.

10. Die Vorrichtung nach Anspruch nach Anspruch 9, wobei der temporäre Radionetzwerk-Identifizierer oder das ausgewählte Algorithmus-Informationselement erzeugt werden auf eine Weise, die zumindest ein oder mehrere Bits freilässt, um Information in Huckpack zu nehmen darüber, ob die Erzeugung des neuen Schlüssels (K_eNB) auf dem geteilten Geheimnis basieren soll.

11. Eine Vorrichtung, wobei die Vorrichtung ein mobiles Terminal zum Erzeugen eines neuen Schlüssels (K_eNB) ist, der verwendet wird, um die Kommunikation zwischen einem mobilen Terminal (UE) und einer Ziel-Basisstation zu schützen, wenn das mobile Terminal einen Handover von einer Ursprungsbasisstation an die Ziel-Basisstation durchführt, wobei die Vorrichtung aufweist:
ein Modul zum Erzeugen eines ersten temporären Schlüssels (K_eNB*) durch das mobile Terminal basierend auf dem Schlüssel, der zwischen dem mobilen Terminal und der Ursprungsbasisstation verwendet wird; **gekennzeichnet durch**:
ein Modul zum Erzeugen eines zweiten temporären Schlüssels (K_ENB*+) basierend auf dem ersten temporären Schlüssel und ferner basierend auf einem geteilten Geheimnis, das die Schlüsselerzeugungseinheit und das mobile Terminal miteinander teilen;
ein Modul zum Erzeugen des neuen Schlüssels (K_eNB) **durch** das mobile Terminal basierend auf dem zweiten temporären Schlüssel (K_ENB*+).

12. Die Vorrichtung nach einem der Ansprüche 9 bis 11, wobei der neue Schlüssel (K_eNB) erzeugt wird basierend auf dem geteilten Geheimnis, das die Schlüsselerzeugungseinheit und das mobile Terminal miteinander teilen, falls die Ursprungsbasisstation als unsicher betrachtet wird.

13. Ein Computerprogramm aufweisend Computerprogrammcode, der wenn er auf einem Computer ausgeführt wird, den Computer in die Lage versetzt, als eine Vorrichtung nach einem der Ansprüche 9 bis 12 zu agieren.

## Revendications

1. Procédé de génération d'une nouvelle clé (K_eNB) qui est utilisée pour protéger la communication entre un terminal mobile (UE) et une station de base cible lorsque ledit équipement d'utilisateur effectue un transfert intercellulaire d'une station de base de source vers ladite station de base cible, ledit procédé consistant à :
générer, par ladite station de base de source, une première clé temporaire (K_eNB*) sur la base de la clé (K_eNB) qui est utilisée pour protéger la communication entre ledit terminal mobile (UE) et ladite station de base de source ; ledit procédé étant **caractérisé par** les étapes consistant à :
transférer ladite première clé temporaire (K_eNB*) à une unité de génération de clé pour générer une deuxième clé temporaire (K_ENB*+) sur la base de ladite première clé temporaire (K_eNB*) et en outre sur la base d'un secret partagé que ladite unité de génération de clé et ledit terminal mobile partagent l'un avec l'autre ;
transférer ladite deuxième clé temporaire (K_ENB*+) à ladite station de base cible et générer ladite nouvelle clé (K_eNB) sur la base de ladite deuxième clé temporaire (K_ENB*+) ;
générer, par ledit terminal mobile, ladite première clé temporaire (K_eNB*) sur la base de la clé utilisée entre ledit terminal mobile et ladite station de base de source et générer ladite deuxième clé temporaire (K_ENB*+) sur la base de ladite première clé temporaire et en outre sur la base d'un secret partagé que ladite unité de génération de clé et ledit terminal mobile partagent l'un avec l'autre ;
générer, par ledit terminal mobile, ladite nouvelle clé (K_eNB) sur la base de ladite deuxième clé temporaire (K_ENB*+).

2. Procédé selon la revendication 1, consistant en outre à :
transférer, de ladite unité de génération de clé audit terminal mobile, des informations indiquant si la génération de ladite nouvelle clé (K_eNB) devrait être basée sur ledit secret partagé, et
si lesdites informations indiquent que la génération de ladite nouvelle clé (K_eNB) devrait être basée sur ledit secret partagé, générer ladite deuxième clé temporaire (K_ENB*+) sur la base de ladite première clé temporaire et ensuite ladite nouvelle clé (K_eNB) sur la base de ladite deuxième clé temporaire (K_ENB*+) par ledit terminal mobile, et
si lesdites informations indiquent que la génération de ladite nouvelle clé (K_eNB) ne devrait pas être basée sur ledit secret partagé, générer, par ledit terminal mobile, ladite première clé temporaire (K_eNB*) et ensuite ladite nouvelle clé (K_eNB) sur la base de ladite première clé temporaire (K_eNB*).

3. Procédé selon la revendication 1 ou 2, dans lequel
des informations indiquant si la génération de ladite nouvelle clé (K_eNB) devrait être basée sur ledit secret partagé sont envoyées d'une manière superposée avec d'autres informations transmises pendant ledit transfert intercellulaire de ladite unité de génération de clé audit terminal mobile.

4. Procédé selon la revendication 3, dans lequel des informations indiquant si la génération de ladite nouvelle clé (K_eNB) devrait être basée sur ledit secret partagé sont envoyées d'une manière superposée avec d'autres informations transmises pendant ledit transfert intercellulaire de ladite unité de génération de clé audit terminal mobile, lesdites autres informations étant l'identifiant temporaire de réseau radio ou l'élément d'information d' algorithme sélectionné.

5. Procédé selon l' une des revendications 1 à 5, dans lequel
ledit identifiant temporaire de réseau radio ou l'élément d'information d'algorithme sélectionné est généré d'une manière qui laisse au moins un ou plusieurs bits pour des informations de superposition indiquant si la génération de ladite nouvelle clé (K_eNB) devrait être basée sur ledit secret partagé.

6. Procédé selon l'une des revendications 1 à 5, dans lequel
lesdites stations de base de source et cible sont des Nodes B évolués dans un système LTE ; et/ou
ladite unité de génération de clé est une entité de gestion de mobilité et/ou une passerelle SAE ; et/ou
ledit secret partagé est une ou plusieurs des clés suivantes : K_NASenc, K_NASint ou K_ASME d'un système LTE ou une clé qui est déduite sur la base d' une ou de plusieurs de celles-ci.

7. Système pour générer une nouvelle clé (K_eNB) qui est utilisée pour protéger la communication entre un terminal mobile (UE) et une station de base cible lorsque ledit terminal mobile effectue un transfert intercellulaire d'une station de base de source vers ladite station de base cible, ledit système comprenant :
un module pour générer, par ladite station de base de source, une première clé temporaire (K_eNB*) sur la base de la clé (K_eNB) qui est utilisée pour protéger la communication entre ledit terminal mobile (UE) et ladite station de base de source ;
**caractérisé par** :
un module pour transférer ladite première clé temporaire (K_eNB*) à une unité de génération de clé pour générer une deuxième clé temporaire (K_ENB*+) sur la base de ladite première clé temporaire (K_eNB*) et en outre sur la base d'un secret partagé que ladite unité de génération de clé et ledit terminal mobile partagent l'un avec l'autre ;
un module pour transférer ladite deuxième clé temporaire (K_ENB*+) à ladite station de base cible et générer ladite nouvelle clé (K_eNB) sur la base de ladite deuxième clé temporaire (K_ENB*+) ;
un module pour générer, par ledit terminal mobile, ladite première clé temporaire (K_eNB*) sur la base de la clé utilisée entre ledit terminal mobile et ladite station de base de source et générer ladite deuxième clé temporaire (K_ENB*+) sur la base de ladite première clé temporaire et en outre sur la base d'un secret partagé que ladite unité de génération de clé et ledit terminal mobile partagent l'un avec l'autre ;
un module pour générer, par ledit terminal mobile, ladite nouvelle clé (K_eNB) sur la base de ladite deuxième clé temporaire (K_ENB*+).

8. Système selon la revendication 7, comprenant en outre :
un module pour effectuer un procédé selon l'une des revendications 1 à 6.

9. Dispositif pour générer une nouvelle clé (K_eNB) qui est utilisée pour protéger la communication entre un terminal mobile (UE) et une station de base cible lorsque ledit terminal mobile effectue un transfert intercellulaire d'une station de base de source vers ladite station de base cible, ledit dispositif étant **caractérisé en ce qu'**il comprend :
une unité de génération de clé pour générer une deuxième clé temporaire (K_ENB*+) sur la base d'une première clé temporaire (K_eNB*) et en outre sur la base d'un secret partagé que ladite unité de génération de clé et ledit terminal mobile partagent l'un avec l'autre, dans lequel
il a été généré, par ladite station de base de source, une première clé temporaire (K_eNB*) sur la base de la clé (K_eNB) qui est utilisée pour protéger la communication entre ledit terminal mobile (UE) et ladite station de base de source, ladite première clé temporaire ayant été envoyée à ladite unité de génération de clé ; et
un module pour envoyer ladite deuxième clé temporaire (K_ENB*+) à ladite station de base cible de sorte qu'elle puisse générer ladite nouvelle clé (K_eNB) sur la base de ladite deuxième clé temporaire (K_ENB*+).

10. Dispositif selon la revendication 9, dans lequel
ledit identifiant temporaire de réseau radio ou l'élément d'information d'algorithme sélectionné est généré d'une manière qui laisse au moins un ou plusieurs bits pour des informations de superposition indiquant si la génération de ladite nouvelle clé (K_eNB) devrait être basée sur ledit secret partagé.

11. Dispositif, ledit dispositif étant un terminal mobile pour générer une nouvelle clé (K_eNB) qui est utilisée pour protéger la communication entre un terminal mobile (UE) et une station de base cible lorsque ledit terminal mobile effectue un transfert intercellulaire d'une station de base de source vers ladite station de base cible, ledit dispositif comprenant ;
un module pour générer, par ledit terminal mobile, une première clé temporaire (K_eNB*) sur la base de la clé utilisée entre ledit terminal mobile et ladite station de base de source ; **caractérisé par** ;
un module pour générer une deuxième clé temporaire (K_ENB_{*}+) sur la base de ladite première clé temporaire et en outre sur la base d'un secret partagé que ladite unité de génération de clé et ledit terminal mobile partagent l'un avec l'autre ;
un module pour générer, par ledit terminal mobile, ladite nouvelle clé (K_eNB) sur la base de ladite deuxième clé temporaire (K_ENB*+).

12. Dispositif selon l'une des revendications 9 à il, dans lequel ladite nouvelle clé (K_eNB) est générée sur la base d'un secret partagé que ladite unité de génération de clé et ledit terminal mobile partagent l'un avec l'autre si ladite station de base de source est considérée comme peu sûre.

13. Programme d'ordinateur comprenant un code de programme d'ordinateur qui, lorsqu'il est exécuté sur un ordinateur, permet audit ordinateur d'agir en tant que dispositif selon l'une des revendications 9 à 12.
